# EUROPÄISCHE PATENTSCHRIFT

(11) **EP 3 927 592 B1**
(45) Veröffentlichungstag und Bekanntmachung des Hinweises auf die Patenterteilung: **06.09.2023**
(21) Anmeldenummer: 19817638.0
(22) Anmeldetag: 05.12.2019
(51) Int. Cl.: B61B 12/00, B62H 3/04, B62H 3/08

(54) **FAHRBETRIEBSMITTEL EINER SEILBAHNANLAGE ZUM TRANSPORT VON ZWEIRÄDRIGEN FAHRZEUGEN**
CABLE CAR OF A CABLE CAR SYSTEM FOR TRANSPORTING TWO-WHEELED VEHICLES
MOYEN DE TRANSPORT D'UNE INSTALLATION DE TÉLÉPHÉRIQUE POUR LE TRANSPORT DE VÉHICULES À DEUX ROUES

(30) Priorität: 19.02.2019 AT 501292019
(43) Veröffentlichungstag der Anmeldung: 29.12.2021
(73) Patentinhaber: Innova Patent GmbH, 6922 Wolfurt (AT)
(72) Erfinder: TRITTLER, Florian, 6832 Sulz (AT); MANGOLD, Daniel, 6912 Hoerbranz (AT)
(74) Vertreter: Beer & Partner Patentanwälte KG
(86) Internationale Anmeldenummer: PCT/EP2019/083844
(87) Internationale Veröffentlichungsnummer: WO 2020/169226

(56) Entgegenhaltungen:
- WO-A1-2017/001224
- FR-A1- 2 958 255
- JP-A- 2016 168 901
- JP-A- 2016 187 972

## Beschreibung

Die Erfindung betrifft ein Fahrbetriebsmittel einer Seilbahnanlage zum Transport von zweirädrigen Fahrzeugen, wobei das Fahrbetriebsmittel einen Rahmen aufweist, dessen Deckenbereich, Bodenbereich und Seitenbereiche einen Transportraum umgeben, wobei in wenigstens einem Teilbereich des Bodenbereiches ein Boden angeordnet ist, und wobei das Fahrbetriebsmittel einen Tragarm zur Verbindung mit einem Förderseil oder einem Zugseil aufweist.

Weiters betrifft die Erfindung eine Seilbahnanlage mit Fahrbetriebsmitteln zum Transport von Personen und Fahrbetriebsmitteln zum Transport von zweirädrigen Fahrzeugen.

In vielen Skigebieten ist es mittlerweile üblich, dass Liftanlagen in der schneefreien Zeit nicht nur von Wanderern und Bergsteigern, sondern auch vermehrt von Radsportlern genutzt werden. Insbesondere im Downhill-Sektor ist dies besonders beliebt, da sich dadurch zeit- und kräfteraubende Bergfahrten vermeiden lassen.

Da der Transport von Fahrrädern mit herkömmlichen Sesseln oder in herkömmlichen Kabinen unbequem oder sogar unmöglich ist, tauschen manche Seilbahnbetreiber außerhalb der Skisaison einige der Sessel oder Kabinen gegen eigens für den Transport von Fahrzeugen entwickelte Fahrbetriebsmittel aus oder bauen diese um.

Bekannt sind beispielsweise Fahrbetriebsmittel, bei denen die Fahrräder außen am Sessel oder an der Kabine gehalten oder abgestellt werden, während die Passagiere regulär am Sessel oder in der Kabine Platz nehmen. Beispielsweise beschreibt FR 2 958 255 A1 ein derartiges Fahrbetriebsmittel. Das Benutzen solcher Fahrbetriebsmittel gestaltet sich jedoch unpraktisch, da es in der begrenzten Zeit, während der das Fahrbetriebsmittel den Einstiegs- und Ausstiegsbereich einer Station durchläuft, für den Fahrgast nur erschwert möglich ist, das Fahrzeug am Fahrbetriebsmittel aufzuladen und in dasselbe Fahrbetriebsmittel einzusteigen bzw. aus dem Fahrbetriebsmittel auszusteigen und das Fahrzeug vom Fahrbetriebsmittel abzuladen. Die Alternative, dass der Seilbahnbetreiber hierfür Personal zur Verfügung stellt, stellt einen zusätzlichen Kostenaufwand für diesen dar.

Es sind auch Lösungen bekannt, beispielsweise gemäß WO 2016/164941 A1, bei denen zusätzlich zu Fahrbetriebsmitteln für den Transport von Personen auch Fahrbetriebsmittel verwendet werden, die nur dem Transport von Fahrrädern dienen. Bei diesen und auch anderen bekannten und vergleichbaren Fahrbetriebsmitteln für den Transport von Fahrrädern werden die Fahrzeuge nebeneinander stehend transportiert. Bei derartigen Fahrbetriebsmittel ist nachteilig, dass die äußere Form der Fahrbetriebsmittel durch diese Art des Transportes der Fahrzeuge von der Form der regulären, für den Personentransport bestimmten, Sessel bzw. Kabinen abweicht, wodurch sie nur schwer in den Seilbahnbetrieb einzubinden sind, und beispielsweise beim Durchfahren der Stationen und beim Garagieren der Fahrbetriebsmittel Probleme bereiten können.

Weitere Fahrbetriebsmittel zum Transport von zweirädrigen Fahrzeugen, insbesondere von Fahrrädern, sind beispielsweise aus JP 2016-168901 A, JP 2016-187972 A und WO 2017/001224 A1 bekannt.

Der Erfindung liegt die Aufgabe zu Grunde, ein Fahrbetriebsmittel der eingangs genannten Gattung zur Verfügung zu stellen, das die angesprochenen Probleme weitestgehend vermeidet. Insbesondere soll ein Fahrbetriebsmittel zum Transport von zweirädrigen Fahrzeugen zur Verfügung gestellt werden, in dem die Fahrzeuge einfach und schnell befestigt und aus dem die Fahrzeuge einfach und schnell entnommen werden können, und das gut in bestehende Seilbahnsysteme, insbesondere in die damit verbundenen Abläufe, integrierbar ist.

Gelöst wird diese Aufgabe erfindungsgemäß mit einem Fahrbetriebsmittel, das die Merkmale von Anspruch 1 aufweist.

Bevorzugte und vorteilhafte Ausführungsformen der Erfindung sind Gegenstand der Unteransprüche.

Erfindungsgemäß ist vorgesehen, dass im Transportraum im Deckenbereich wenigstens zwei Halteeinrichtungen zum Halten jeweils eines Laufrades eines Fahrzeuges angeordnet sind.

Vorzugsweise sind die Fahrzeuge jeweils mit einem Laufrad, insbesondere dem vorderen Laufrad, an der Halteeinrichtung angeordnet bzw. werden an einem Laufrad von der Halteeinrichtung gehalten, sodass die Fahrzeuge jeweils im Wesentlichen frei vom Deckenbereich herabhängen.

Durch die erfindungsgemäße Anordnung der Halteeinrichtungen können im Deckenbereich zwei oder mehr als zwei zweirädrige Fahrzeuge, im Wesentlichen innerhalb eines vom Rahmen begrenzten Transportraumes, gehalten werden, insbesondere frei in diesem hängen.

Da zweirädrige Fahrzeuge in der Regel länger als hoch ausgeführt sind und insbesondere kleinere Fahrbetriebsmittel, die bei Umlaufseilbahnen verwendet werden, eine größere vertikale als horizontale Erstreckung aufweisen, kann somit der Platz im Transportraum optimal genutzt werden.

Der Rahmen, der den Transportraum begrenzt, ist dabei bevorzugt z.B. wie der Rahmen von Fahrbetriebsmitteln, wie Kabinen, dimensioniert, die für den Personentransport vorgesehenen sind. Dadurch, dass beim erfindungsgemäßen Fahrbetriebsmittel keine Bestandteile, wie beispielsweise Halteeinrichtungen, über den Transportraum bzw. den Rahmen des Fahrbetriebsmittels hinausragen, kann das erfindungsgemäße Fahrbetriebsmittel während des normalen Seilbahnbetriebes und bei logistischen Abläufen im Seilbahnbetrieb, wie beispielsweise dem Garagieren der Fahrbetriebsmittel, genauso wie ein Fahrbetriebsmittel zum Transport von Personen gehandhabt werden.

Insbesondere ist das erfindungsgemäße Fahrbetriebsmittel für den Transport von Fahrrädern ausgelegt. Der Transport von motorisierten zweirädrigen Fahrzeugen, wie Motorrädern, oder antriebslosen zweirädrigen Fahrzeugen, wie Rollern, ist im Rahmen der Erfindung jedoch auch möglich.

Die Halteeinrichtungen des erfindungsgemäßen Fahrbetriebsmittels können beispielsweise wie die in der WO 2017/001224 A1 beschriebene Vorrichtung zum Transportieren von Fahrrädern ausgeführt sein, aber natürlich auch eine davon abweichende Form aufweisen. Vorzugsweise werden im Rahmen der Erfindung Halteeinrichtungen verwendet, mit denen ein Laufrad eines zweirädrigen Fahrzeuges gehalten, eingeklemmt oder fixiert werden kann, sodass das Fahrzeug an der Halteeinrichtung hängend gehalten wird. Andere Halteeinrichtungen, wie einfache Haken, an denen z.B. das Vorderrad eines Fahrrades eingehängt werden kann, sind beispielsweise auch möglich, wenn auch nicht bevorzugt.

Im Rahmen der Erfindung sind Ausführungsformen möglich, bei denen eine oder mehr als eine Halteeinrichtung am Rahmen angeordnet ist/sind. Die Halteeinrichtungen können dabei beispielsweise an Querstreben des Rahmens im Deckenbereich oder an Vertikal-, Schräg- oder Querstreben des Rahmens in den Seitenbereichen angeordnet sein. Die Konstruktion des Fahrbetriebsmittels kann durch eine derartige Anordnung der Halteeinrichtungen sehr einfach gehalten werden.

Insbesondere ist es im Rahmen der Erfindung bevorzugt, wenn im Transportraum wenigstens drei, vier, fünf, sechs, sieben oder acht Halteeinrichtungen angeordnet sind. Die Anzahl der Halteeinrichtungen ist vorzugsweise an die Transportkapazität jener Fahrbetriebsmittel angepasst, die bei derselben Seilbahnanlage für den Personentransport verwendet werden. Dadurch lässt sich eine mit den erfindungsgemäßen Fahrbetriebsmitteln ausgestattete Seilbahnanlage besonders effektiv, d.h. mit besonders hoher Auslastung, betreiben. Dies ist ein weiterer Vorteil gegenüber bekannten Fahrbetriebsmittel zum Transport von zweirädrigen Fahrzeugen, die oft konstruktionsbedingt nur eine geringe Transportkapazität aufweisen.

Erfindungsgemäß weist das Fahrbetriebsmittel wenigstens ein Tragelement auf, das im Transportraum im Deckenbereich angeordnet ist, wobei eine oder mehr als eine, insbesondere alle, der Halteeinrichtungen an diesem Tragelement angeordnet sind.

Das Tragelement kann beispielsweise ein säulenförmiger Träger oder ein Gerüst sein, der/das an wenigstens einem Ende mit dem Rahmen verbunden ist.

Der Vorteil dieser Ausführungsformen liegt darin, dass die Halteeinrichtungen durch das Tragelement im Inneren des Transportraumes und nicht nur an den Seitenbereichen oder am Deckenbereich des Rahmens angeordnet werden können.

Erfindungsgemäß verläuft das Tragelement in einem Mittelbereich des Transportraumes vertikal zwischen dem Deckenbereich und dem Bodenbereich, insbesondere weist das Tragelement bei einer derartigen Ausführungsform die Form eines säulenförmigen Trägers auf. Vorzugsweise sind die Halteeinrichtungen gleichmäßig um das Tragelement herum verteilt angeordnet. Durch eine derartige Anordnung der Halteeinrichtungen kann der Transportraum möglichst gut genutzt werden.

Bei einer besonders vorteilhaften Ausführungsform ist vorgesehen, dass die Halteeinrichtungen vom Tragelement radial nach außen weg ragen, sodass sie im Wesentlichen in Richtung der Seitenbereiche weisen. Durch eine derartige Anordnung der Halteeinrichtungen können die Fahrzeuge durch Personen einfach und schnell in die Halteeinrichtungen eingehängt und aus den Halteeinrichtungen entfernt werden.

Im Rahmen der Erfindung ist vorgesehen, dass das Tragelement um eine Vertikalachse verdrehbar ist. Beispielsweise kann das Tragelement manuell verdrehbar sein, oder aber einen Antrieb zum Drehen des Tragelementes um die Vertikalachse aufweisen. Ein mit einem derartigen Tragelement ausgestattetes Fahrbetriebsmittel kann auf besonders vorteilhafte Weise von einer einzigen Seite aus beladen und entladen werden, ohne dass die Personen beim Be- und Entladen gänzlich in den Transportraum eintreten oder sogar den Transportraum überhaupt betreten müssen. Insbesondere kann bei einer derartigen Ausführungsform wenigstens ein Teil des Bodens mit dem Tragelement verbunden und gemeinsam mit dem Tragelement verdrehbar sein. Dadurch können Teile des Fahrzeuges, beispielsweise das Hinterrad, am Boden abgestellt werden, während das Tragelement zusammen mit den Fahrzeugen nach wie vor gut verdrehbar bleibt.

Vorzugsweise ist im Transportraum wenigstens ein Anlageelement angeordnet. Vorzugsweise weist das Fahrbetriebsmittel pro Halteeinrichtung jeweils ein separates Anlageelement auf. An dem Anlageelement kann ein im Transportraum aufgenommenes Fahrzeug, das beispielsweise mit einem vorderen Laufrad in der Halteeinrichtung aufgenommen ist und von der Halteeinrichtung herabhängt, mit dem hinteren Laufrad anliegen. Dadurch wird ein Pendeln des Fahrzeuges während des Transportes bzw. während des Bewegens des Fahrbetriebsmittels verhindert.

Es ist auch möglich, dass für jeweils zwei oder mehr als zwei Halteeinrichtungen jeweils ein gemeinsames Anlageelement vorgesehen ist. Das/die Anlageelement/e kann/können im Bodenbereich oder gegebenenfalls am Tragelement angeordnet sein.

In einer bevorzugten Ausführungsform der Erfindung ist jeder Halteeinrichtung ein verschwenkbares, vorzugsweise separates, Anlageelement zugeordnet, das automatisch verschwenkbar ist. Ein derartiges, schwenkbares Anlageelement hilft beim Be- und Entladen des Fahrbetriebsmittels.

Damit die Räder der Fahrzeuge nicht vom Anlageelement abrutschen bzw. die Fahrzeuge stabiler transportiert werden können, können die Anlageelemente Aufnahmen für Laufräder aufweisen.

Im Rahmen der Erfindung ist es möglich, dass in wenigstens einem Teilbereich wenigstens eines Seitenbereiches eine Seitenwand und/oder in wenigstens einem Teilbereich des Deckenbereiches eine Decke angeordnet ist. Dadurch können die Fahrzeuge vor Witterungseinflüssen geschützt werden. Insbesondere kann dadurch auch verhindert werden, dass Bestandteile der Fahrzeuge, die sich beim Transport von diesen lösen, aus dem Transportraum fallen können.

Als Boden und/oder Seitenwand und/oder Decke können durchgängige, transparente oder intransparente Plattenelemente, beispielsweise aus Plexiglas oder Blech, aber auch Gitterelemente oder eine Mischung aus Platten und Gitterelementen verwendet werden. Die Seitenwände und die Decke können ganz oder teilweise im Wesentlichen auch wie normale Kabinen zum Personentransport ausgeführt sein.

Weiters kann bei einem erfindungsgemäßen Fahrbetriebsmittel seitlich vom Bodenbereich weg ragend eine Trittfläche angeordnet sein. Diese Trittfläche kann beim Be- und Entladen des Fahrbetriebsmittels betreten werden und überbrückt beispielsweise einen Spalt zwischen dem Boden des Fahrbetriebsmittels und dem Bahnsteig in der Seilbahnstation.

Die Erfindung betrifft auch eine Seilbahnanlage mit Fahrbetriebsmitteln zum Transport von Personen und mit erfindungsgemäßen Fahrbetriebsmitteln zum Transport von zweirädrigen Fahrzeugen.

Besonders bevorzugt ist es bei einer derartigen Seilbahnanlage, wenn die Rahmen der Fahrbetriebsmittel zum Transport von Personen und die Rahmen der Fahrbetriebsmittel zum Transport von zweirädrigen Fahrzeugen im Wesentlichen die gleichen Außenmaße aufweisen. Dies erleichtert die Einbindung der Fahrbetriebsmittel zum Transport von Fahrzeugen in den Seilbahnbetrieb, und ermöglicht beispielsweise das gemeinsame Garagieren der Fahrbetriebsmittel zum Transport von Personen und der erfindungsgemäßen Fahrbetriebsmittel zum Transport von Fahrzeugen.

Weitere Einzelheiten, Merkmale und Vorteile der Erfindung ergeben sich aus der nachstehenden Beschreibung unter Bezugnahme auf die angeschlossenen Zeichnungen, in welchen bevorzugte Ausführungsformen dargestellt sind. Es zeigt:
Fig. 1 eine isometrische Ansicht eines erfindungsgemäßen Fahrbetriebsmittels gemäß einer ersten Ausführungsform,
Fig. 2 eine Weiterbildung der in Fig. 1 dargestellten Ausführungsform des erfindungsgemäßen Fahrbetriebsmittels in Frontal- und in Seitansicht,
Fig. 3 ein erfindungsgemäßes Fahrbetriebsmittel in Frontal- und in Seitansicht gemäß einer weiteren Ausführungsform, und
Fig. 4 bis 7 aufeinanderfolgende Schritte eines Entladevorganges des in Fig. 3 abgebildeten Fahrbetriebsmittels.

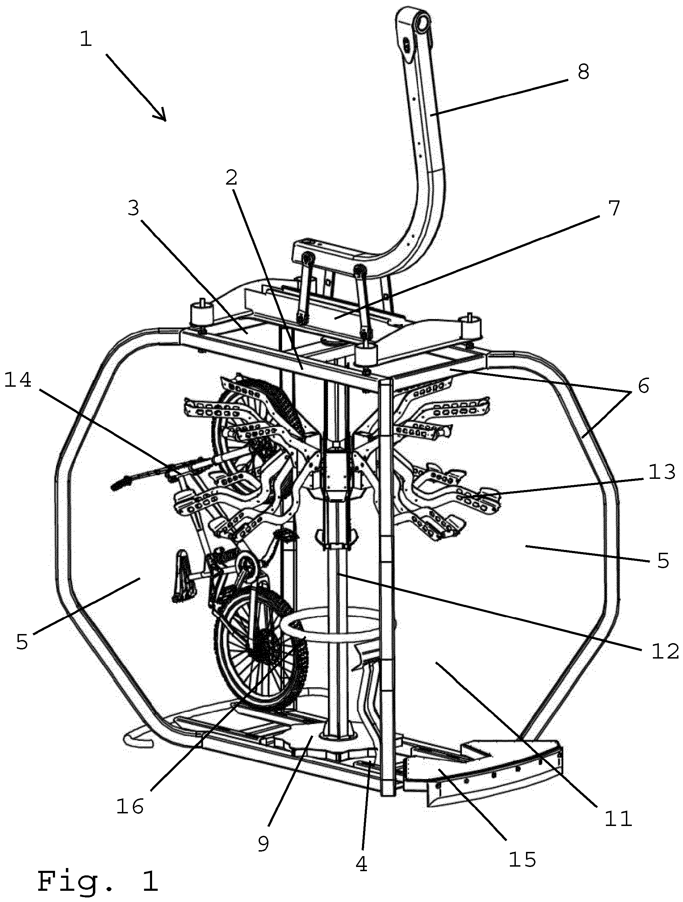

Fig. 1 zeigt ein erfindungsgemäßes Fahrbetriebsmittel 1 in einer isometrischen Ansicht, wobei das Fahrbetriebsmittel 1 einen Rahmen 2 mit einem Deckenbereich 3, einem Bodenbereich 4 und Seitenbereichen 5 aufweist.

In der dargestellten Ausführungsform weist der Rahmen 2 Profilträger 6 auf, wobei Profilträger 6 in zwei einander gegenüberliegenden Seitenbereichen 5 in jeweils einer im Wesentlichen achteckigen, geschlossenen Form angeordnet sind, und wobei die achteckigen Formen über weitere Profilträger 6, die im Deckenbereich 3 und im Bodenbereich 4 verlaufen, miteinander verbunden sind.

Die Profilträger 6 in Fig. 1 weisen ein rechteckiges, insbesondere quadratisches, Querschnittsprofil auf. Möglich ist im Rahmen der Erfindung jedoch auch, dass die Profilträger 6 ein anderes, beispielsweise ein kreisrundes, Querschnittsprofil aufweisen, oder dass der Rahmen 2 aus unterschiedlich geformten Profilträgern 6 zu einer anderen als der dargestellten, achteckigen Form zusammengesetzt ist. Im Wesentlichen sind auch alle Formen von Rahmen möglich, mit denen auch herkömmliche Fahrbetriebsmittel für den Personentransport, wie Kabinen, hergestellt werden.

An den im Deckenbereich 3 angeordneten Profilträgern 6 des Rahmens 2 ist eine Halterung 7 für einen Tragarm 8 angeordnet. Über den Tragarm 8 und die daran angeordnete Kuppelklemme kann das Fahrbetriebsmittel 1 auf an sich bekannte Weise in den Stationen einer Seilbahnanlage an ein nicht dargestelltes Förder- oder Zugseil angekuppelt bzw. von diesem abgekuppelt werden.

In wenigstens einem Teilbereich des Bodenbereiches 4 ist ein Boden 9 vorgesehen, der in der dargestellten Ausführungsform auf den Profilträgern 6 im Bodenbereich 4 montiert ist. Der Boden 9 kann eine durchgängige Platte, beispielsweise aus Metall, sein, oder auch ein Gitter aufweisen.

Anders als bei der in Fig. 1 dargestellten Ausführungsform kann im Deckenbereich 3 eine Decke am Rahmen 2, insbesondere an den Profilträgern 6 des Rahmens 2, angeordnet sein. Ebenso ist es möglich, dass zum Schutz der Fahrzeuge 14 im Fahrbetriebsmittel 1 an zumindest einem, gegebenenfalls zwei, drei oder allen vier Seitenbereich(en) 5, insbesondere an den Profilträgern 6 des Seitenbereiches 5, zumindest bereichsweise eine Seitenwand angeordnet ist.

Der Rahmen 2 definiert mit den zwischen den Profilträgern 6 gebildeten Bereichen 3, 4 und 5 einen Transportraum 11, wobei der Transportraum 11 nach außen hin nicht komplett abgeschlossen sein muss, sondern ein, insbesondere in Richtung Deckenbereich 3, und/oder einem oder mehrerer der Seitenbereiche 5, zumindest teilweise geöffneter Raum sein kann.

In einem Mittelbereich des Transportraumes 11 verläuft ein Tragelement 12 vom Deckenbereich 3 bis zum Bodenbereich 4. Das Tragelement 12 weist die Form einer achteckigen Säule auf und ist mit dem Rahmen 2 im Deckenbereich 3 und im Bodenbereich 4 um eine Vertikalachse drehbar verbunden. Im Rahmen der Erfindung kann das Tragelement 12 im Querschnitt auch die Form eines anderen Vieleckes, beispielsweise eines Quadrates, aufweisen oder rund sein.

Der Boden 9 weist in der dargestellten Ausführungsform eine Kreisform auf, ist mit dem Tragelement 12 starr verbunden und demnach gemeinsam mit dem Tragelement 12 verdrehbar. Der Boden 9 kann beispielsweise an den Profilträgern 6 des Bodenbereiches 4 drehbar gelagert sein.

Am Tragelement 12 sind im Deckenbereich 3 gleichmäßig um das Tragelement 12 verteilte, radial nach außen gerichtete Halteeinrichtungen 13 angeordnet. Die Halteeinrichtungen 13 sind in den in den Zeichnungen dargestellten Ausführungsformen wie die in der WO 2017/001224 A1 beschriebenen Vorrichtungen aufgebaut, können aber natürlich auch einen anderen Aufbau haben.

In der in Fig. 1 dargestellten Ausführungsform weist das erfindungsgemäße Fahrbetriebsmittel 1 acht Halteeinrichtungen 13 auf, die an den acht Seiten des achteckigen, säulenförmigen Tragelementes 12 angeordnet sind. Möglich sind im Rahmen der Erfindung jedoch auch Fahrbetriebsmittel 1 mit mehr als acht oder weniger als acht Halteeinrichtungen 13, wobei die Form des Tragelementes 12 vorzugsweise darauf abgestimmt ist.

Im Rahmen der Erfindung ist es möglich, dass die Halteeinrichtungen 13 über eine nicht dargestellte Tragkonstruktion am Tragelement 12 angeordnet sind. In diesem Fall ist die Anzahl der Halteeinrichtungen 13 unabhängig von der Form des Tragelementes 12.

Das Tragelement 12 mit den daran angeordneten Halteeinrichtungen 13 kann automatisch und/oder manuell über einen im Deckenbereich 3 oder im Bodenbereich 4 angeordneten, nicht dargestellten Antrieb, beispielsweise einen Elektromotor oder eine Mechanik, verdreht werden.

Weiters kann das Fahrbetriebsmittel 1 mit einer Steuerung verbundene Sensoren aufweisen, mit denen beispielsweise festgestellt werden kann, welche der Halteeinrichtungen 13 ein Fahrzeug 14 halten und welche frei sind bzw. welche Halteeinrichtung 13 zum Bahnsteig zeigt. Der Antrieb kann bei einem derartigen Fahrbetriebsmittel 1 aufgrund der durch die Sensoren ermittelten Daten oder aufgrund einer voreingestellten Sequenz über eine Steuerung derart angetrieben werden, dass das Tragelement 12 beim Beladen und Entladen des Fahrbetriebsmittels 1 mit/von Fahrzeugen 14 derart gedreht wird, dass beim Beladen nicht beladene Halteeinrichtungen 13 bereitgestellt und beim Entladen beladene Halteeinrichtungen 13 automatisch nacheinander bereitgestellt werden.

Seitlich am Bodenbereich 4 des Rahmens 2 ist eine Trittfläche 15 angeordnet, die im Wesentlichen plan zum Boden 9 und/oder plan zum Bahnsteig verläuft und wie der Boden 9 aus einer durchgehenden Platte oder einem Gitter besteht.

Der Rahmen 2 des erfindungsgemäßen Fahrbetriebsmittels 1 weist im Wesentlichen die Form und Außenmaße des Rahmens eines herkömmlichen Fahrbetriebsmittels, wie eine Kabine, für den Personentransport auf.

Das Beladen des Fahrbetriebsmittels 1 mit Fahrzeugen 14 kann beispielsweise wie folgt stattfinden:
- Betreten der Trittfläche 15 mit einem zweirädrigen Fahrzeug 14 mit in Richtung der zur Bedienungsperson weisenden Halteeinrichtung 13 angehobenem Laufrad,
- Einsetzen des Laufrades des Fahrzeuges 14 in die Halteeinrichtung 13,
- Loslassen des Fahrzeuges 14, sodass dieses an der Halteeinrichtung 13 im Wesentlichen frei herab hängt,
- manuelles oder vorzugsweise automatisches Verdrehen des Tragelementes 12, sodass eine Halteeinrichtung 13, die noch kein Fahrzeug 14 hält, zur Trittfläche 15 weist,
- Wiederholen der oben beschriebenen Schritte, bis alle Halteeinrichtungen 13 des Fahrbetriebsmittels 1 ein Fahrzeug 14 halten, oder bis kein weiterer Transportbedarf besteht.

Zum Entladen des Fahrbetriebsmittels 1 werden die Fahrzeuge 14 nacheinander aus den Halteeinrichtungen 13 entnommen, wobei das Tragelement 12 manuell oder vorzugsweise automatisch solange in Richtung zur Trittfläche 15 bzw. zu jener Seite des Fahrbetriebsmittels 1, von der das Fahrbetriebsmittel 1 mit Fahrzeugen 14 bestückt werden kann bzw. Fahrzeuge 14 aus dem Fahrbetriebsmittel 1 entnommen werden können, weitergedreht wird, bis alle Halteeinrichtungen 13 frei von Fahrzeugen 14 und diese entladen sind.

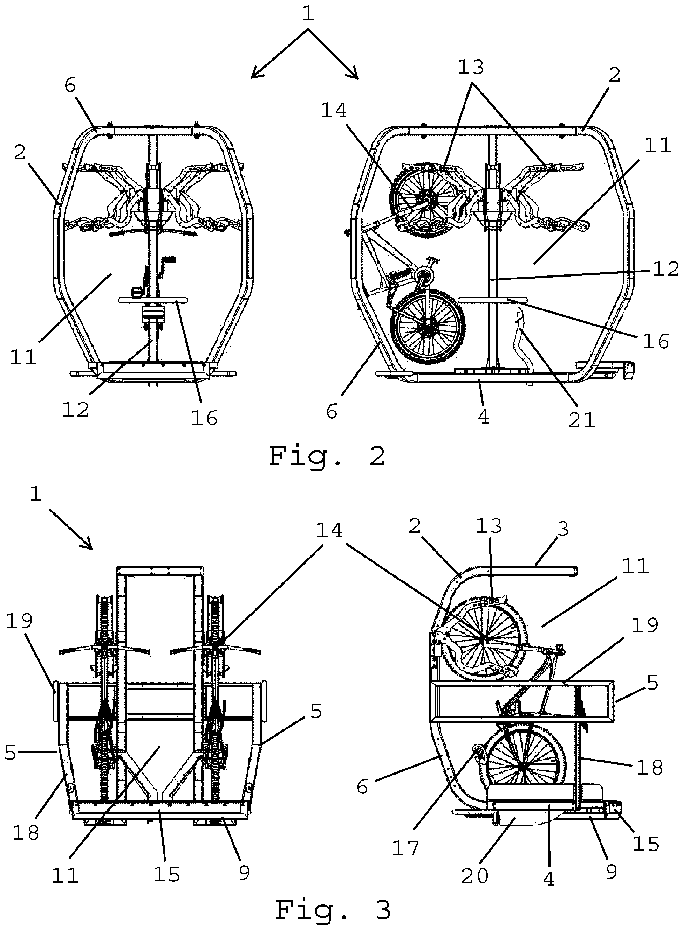

Fig. 2 zeigt eine Weiterbildung der in Fig. 1 dargestellten Ausführungsform des erfindungsgemäßen Fahrbetriebsmittels 1 mit einem drehbaren Tragelement 12, einem starren Anlageelemente 16 und einem Entlademechanismus 21.

Ein zu transportierendes Fahrzeug 14 ist mit einem Vorderrad in einer der am Tragelement 12 angeordneten Halteeinrichtungen 13 aufgenommen und hängt innerhalb des Transportraumes 11 von der Halteeinrichtung 13 herab.

Um zu verhindern, dass das Fahrzeug 14, während das Fahrbetriebsmittel 1 bewegt wird, eine Pendelbewegung ausführt, ist über dem Bodenbereich 4 ein starres Anlageelement 16 in Form eines kreisförmigen Bügels am Tragelement 12 montiert, an dem das Fahrzeug 14 mit seinem hinteren Laufrad anliegt. Am kreisförmigen Bügel können in den Zeichnungen nicht dargestellte, z.B. V-förmige, Aufnahmen angeordnet sein, die ein seitliches Verrutschen der Hinterräder am Bügel verhindern.

Zusätzlich weist das Fahrbetriebsmittel 1 einen Entlademechanismus 21 auf, der um eine im Bodenbereich 4 angeordnete Schwenkachse zwischen einer Ruhestellung, bei der es zum Tragelement 12 hin geschwenkt ist, und einer Entladestellung, bei der es vom Tragelement 12 weg geschwenkt ist, verschwenkbar ist.

Während des Transportes befindet sich der Entlademechanismus 21 in der Ruhestellung.

Während des Entladens des Fahrbetriebsmittels 1 in einer Station wird der Entlademechanismus 21 in die Entladeposition verschwenkt, sobald das Tragelement 12 derart verdreht ist, dass eine Halteeinrichtung 13 zur Trittfläche 15 bzw. zu jener Seite des Fahrbetriebsmittels 1, von der das Fahrbetriebsmittel 1 mit Fahrzeugen 14 bestückt werden kann bzw. Fahrzeuge 14 aus dem Fahrbetriebsmittel 1 entnommen werden können, weist. Dadurch wird das am Anlageelement 16 anliegende Laufrad des Fahrzeuges 14 vom Tragelement 12 wegbewegt und nach oben hin angehoben, sodass das Fahrzeug 14 wenigstens teilweise aus dem Transportraum 11 hinausragt, und dadurch leichter zu greifen und aus der Halteeinrichtung 13 zu lösen ist. Wird das Tragelement 12 weitergedreht, um ein anderes Fahrrad ausladen zu können, schwenkt der Entlademechanismus 21 wieder in die Ruhestellung, um nicht mit dem Laufrad des nächsten Fahrzeuges 14 zu kollidieren.

Sobald die nächste Halteeinrichtung 13 zur Trittfläche 15 bzw. zu jener Seite des Fahrbetriebsmittels 1, von der das Fahrbetriebsmittel 1 mit Fahrzeugen 14 bestückt werden kann bzw. Fahrzeuge 14 aus dem Fahrbetriebsmittel 1 entnommen werden können, weist, wiederholt sich der Vorgang.

Zusätzlich dazu kann der Entlademechanismus 21 auch beim Beladen des Fahrbetriebsmittels 1 in einer Station mitwirken. Der Entlademechanismus 21 ist dafür beim Festmachen eines Fahrzeuges 14 an der Halteeinrichtung 13 vom Tragelement 12 weg geschwenkt, sodass das untere Laufrad des Fahrzeuges 14 daran anliegt, und wird anschließend in die Ruhestellung verschwenkt, sodass das Laufrad gerade an das Anlegeelement 16 herangeführt wird.

Das Verschwenken des Entlademechanismus 21 kann manuell oder automatisch, beispielsweise von einem Motor angetrieben und von einem Sensor ausgelöst oder über eine Mechanik, erfolgen.

Fig. 3 zeigt ein erfindungsgemäßes Fahrbetriebsmittel 1 gemäß einer weiteren Ausführungsform, bei der die Fahrzeuge 14 im Wesentlichen parallel oder in einem Winkel zueinander ausgerichtet, nebeneinander transportiert werden.

Bei der in Fig. 3 dargestellten Ausführungsform bilden Profilträger 6 in einem der Seitenbereiche 5 einen Teil des Rahmens 2 zwischen Deckenbereich 3 und Bodenbereich 4. Weitere Profilträger 18 bilden in den angrenzenden Seitenbereichen 5 einen weiteren Teil des Rahmens 2 und verbinden ein Geländer 19, das den Seitenbereich 5 mit den Halteeinrichtungen 13 und die daran angrenzenden Seitenbereiche 5 umspannt, mit dem Bodenbereich 4. Auch bei dieser Ausführungsform wird von den Profilträgern 6, 18 ein Transportraum 11 begrenzt, wobei der aus den Profilträgern 6, 18 und Geländer 19 gebildete Rahmen 2 im Wesentlichen die Form und Außenmaße des Rahmens eines herkömmlichen Fahrbetriebsmittels, wie eine Kabine, für den Personentransport aufweist.

Zwei Halteeinrichtungen 13 sind im Wesentlichen parallel oder in einem Winkel zueinander ausgerichtet, nebeneinander am sich zwischen Deckenbereich 3 und Bodenbereich 4 erstreckenden Teil des Rahmens angeordnet. Jeder Halteeinrichtung 13 ist ein separates, am Boden 9 schwenkbar angeordnetes Anlageelement 17 in Form einer Schwenkkonsole zugeordnet.

Im Bodenbereich 4 schließt an jener Seite, die den Halteeinrichtungen 13 gegenüberliegt, eine Trittfläche 15 an den Boden 9 an. Der Boden 9 weist im Bereich der schwenkbaren Anlageelemente 17 eine tiefer als die Trittfläche 15 verlaufende Senke 20 auf.

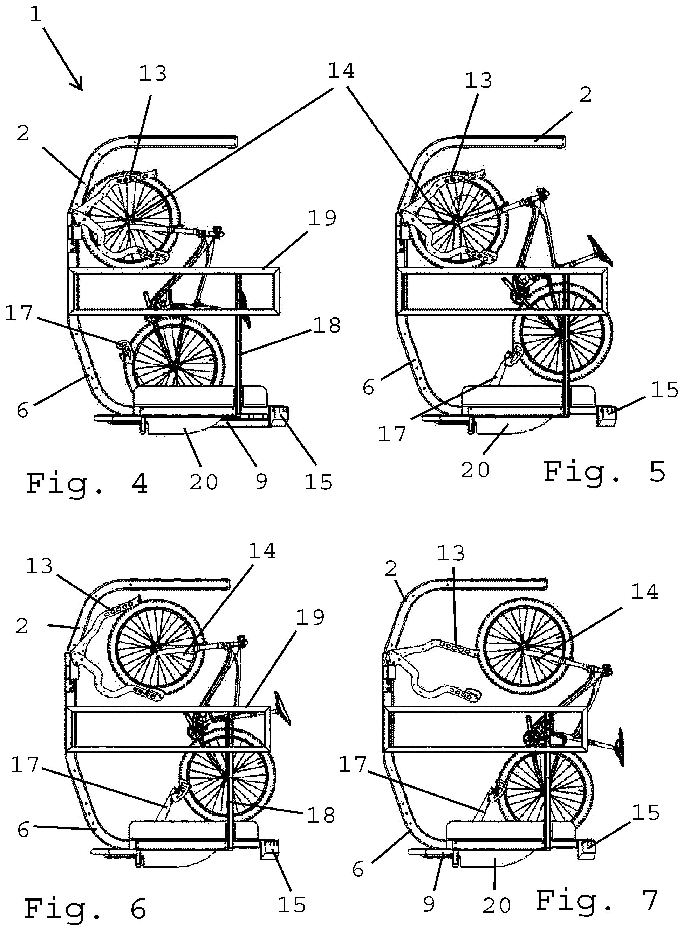

In den Fig. 4 bis 7 ist der Entladevorgang eines Fahrzeuges 14 bei dem Fahrbetriebsmittel 1 gemäß Fig. 3 in mehreren zeitlich aufeinanderfolgenden Schritten dargestellt.

Fig. 4 zeigt das Fahrzeug 14 während des Transportes im Transportraum 11 hängend. Ein vorderes Laufrad des Fahrzeuges 14 ist in einer der beiden Halteeinrichtungen 13 aufgenommen, sodass das Fahrzeug 14 im Wesentlichen frei herabhängt und mit einem hinteren Laufrad am schwenkbaren Anlageelement 17 bzw. in einer daran gebildeten Aufnahme anliegt.

Das schwenkbare Anlageelement 17 befindet sich in Fig. 4 in einer Transportstellung, in der es zu dem Teil des Rahmens 2, an dem die Halteeinrichtungen 13 angeordnet sind, hin geschwenkt ist, sodass das hintere Laufrad abgesenkt und teilweise in der Senke 20 aufgenommen ist.

Fig. 5 zeigt das schwenkbare Anlageelement 17 in eine Ladestellung verschwenkt, wobei das Verschwenken des schwenkbaren Anlageementes 17 vorzugsweise automatisch mit Hilfe eines nicht dargestellten Motors und/oder einer nicht dargestellten Mechanik erfolgt. Beispielsweise könnte eine derartige Mechanik durch die bereits in den Stationen vorhandenen mechanischen Komponenten, durch die bei herkömmlichen Fahrbetriebsmitteln Türen geöffnet bzw. geschlossen werden, oder aber auch durch eigens dafür vorgesehene mechanische Komponenten betätigt werden.

In der Ladestellung ist das schwenkbare Anlageelement 17 von dem Teil des Rahmens 2, an dem die Halteeinrichtungen 13 angeordnet sind, weg geschwenkt, sodass das hintere Laufrad des Fahrzeuges 14 aus der Senke 20 heraus bis über das Trittbrett 15 angehoben ist. In dieser Stellung ist das Fahrzeug 14 zur Entnahme vorbereitet. Das Anlageelement 17 erfüllt somit die Funktion des in Fig. 2 dargestellten Entlademechanismus 21.

In Fig. 6 ist das Fahrzeug 14 mit aus der Halteeinrichtung 13 gelöstem vorderen Laufrad dargestellt, wobei dies durch eine in den Zeichnungen nicht dargestellte Person erfolgt ist.

In Fig. 7 liegt das frei gemachte Fahrzeug 14 mit dem hinteren Laufrad auf der Trittfläche 15 auf und kann (von der nicht dargestellten Person) aus dem Fahrbetriebsmittel 1 entnommen werden.

Das Beladen des Fahrbetriebsmittels 1 läuft in umgekehrter Reihenfolge wie in den Fig. 4 bis 7 beschrieben ab.

Bei der in den Fig. 3 bis 7 dargestellten Ausführungsform des Fahrbetriebsmittels 1 können gleichzeitig mehrere Fahrzeuge 14 in das Fahrbetriebsmittel 1 eingeladen bzw. aus diesem ausgeladen werden.

### Bezugszeichenliste

- 1: Fahrbetriebsmittel
- 2: Rahmen
- 3: Deckenbereich
- 4: Bodenbereich
- 5: Seitenbereich
- 6: Profilträger
- 7: Halterung
- 8: Tragarm
- 9: Boden
- 10: ---
- 11: Transportraum
- 12: Tragelement
- 13: Halteeinrichtung
- 14: Fahrzeug
- 15: Trittfläche
- 16: Anlageelement starr
- 17: Anlageelement schwenkbar
- 18: weitere Profilträger
- 19: Geländer
- 20: Senke
- 21: Entlademechanismus

## Patentansprüche

1. Fahrbetriebsmittel (1) einer Seilbahnanlage zum Transport von zweirädrigen Fahrzeugen (14), wobei das Fahrbetriebsmittel (1) einen Rahmen (2) aufweist, dessen Deckenbereich (3), Bodenbereich (4) und Seitenbereiche (5) einen Transportraum (11) definieren, wobei in wenigstens einem Teilbereich des Bodenbereiches (3) ein Boden (9) angeordnet ist, und wobei das Fahrbetriebsmittel (1) einen Tragarm (8) zur Verbindung mit einem Förderseil oder einem Zugseil aufweist, **dadurch gekennzeichnet, dass** im Transportraum (11) im Deckenbereich (3) wenigstens zwei Halteeinrichtungen (13) zum Halten jeweils eines Laufrades eines Fahrzeuges (14) angeordnet sind, dass das Fahrbetriebsmittel (1) wenigstens ein Tragelement (12) aufweist, das im Transportraum (11) im Deckenbereich (3) angeordnet ist und in einem Mittelbereich des Transportraumes (11) vertikal zwischen dem Deckenbereich (3) und dem Bodenbereich (4) verläuft, dass eine oder mehrere, vorzugsweise alle, Halteeinrichtung(en) (13) am Tragelement (12) angeordnet ist/sind, dass die Halteeinrichtungen (13) vorzugsweise gleichmäßig um das Tragelement (12) herum verteilt angeordnet sind, und dass das Tragelement (12) um eine Vertikalachse verdrehbar ist.

2. Fahrbetriebsmittel nach Anspruch 1, **dadurch gekennzeichnet, dass** eine oder mehr als eine Halteeinrichtung (13) am Rahmen (2), insbesondere an wenigstens einem der Seitenbereiche (5), angeordnet ist/sind und nach innen in den Transportraum (11) hineinragt/hineinragen.

3. Fahrbetriebsmittel nach Anspruch 1 oder 2, **dadurch gekennzeichnet, dass** die Halteeinrichtung/en (13) vom Tragelement (12) radial nach außen weg ragt/ragen.

4. Fahrbetriebsmittel nach einem der Ansprüche 1 bis 3, **dadurch gekennzeichnet, dass** das Tragelement (12) einen Antrieb zum Drehen des Tragelementes (12) um die Vertikalachse aufweist.

5. Fahrbetriebsmittel nach Anspruch 4, **dadurch gekennzeichnet, dass** das Tragelement (12) mit den daran angeordneten Halteeinrichtungen (13) automatisch und/oder manuell über einen im Deckenbereich (3) oder im Bodenbereich (4) angeordneten Antrieb, beispielsweise einen Elektromotor oder eine Mechanik, verdrehbar ist.

6. Fahrbetriebsmittel nach einem der Ansprüche 1 bis 5,
**dadurch gekennzeichnet, dass** wenigstens ein Teil des Bodens (9) mit dem Tragelement (12) verbunden und gemeinsam mit dem Tragelement (12) verdrehbar ist.

7. Fahrbetriebsmittel nach einem der Ansprüche 1 bis 6, **dadurch gekennzeichnet, dass** das Fahrbetriebsmittel (1) wenigstens einen Entlademechanismus (21) aufweist, der derart im Bodenbereich (4) angeordnet ist, dass durch ein Verschwenken des Entlademechanismus (21) ein unteres Laufrad des am anderen Laufrad gehaltenen Fahrzeuges (14) nach oben hin anhebbar ist.

8. Fahrbetriebsmittel nach einem der Ansprüche 1 bis 7, **dadurch gekennzeichnet, dass** im Transportraum (11), vorzugsweise im Bodenbereich (4), wenigstens ein Anlageelement (16, 17), vorzugsweise pro Halteeinrichtung (13) ein Anlageelement (16,17), angeordnet ist.

9. Fahrbetriebsmittel nach Anspruch 8, **dadurch gekennzeichnet, dass** das/die Anlageelement/e (16, 17) am Tragelement (12) angeordnet ist/sind.

10. Fahrbetriebsmittel nach Anspruch 8 oder 9, **dadurch gekennzeichnet, dass** jeder Halteeinrichtung (13) ein verschwenkbares, vorzugsweise separates, Anlageelement (17) zugeordnet ist.

11. Fahrbetriebsmittel nach Anspruch 10, **dadurch gekennzeichnet, dass** jedes Anlageelement (17) derart im Bodenbereich (4) angeordnet ist, dass durch ein Verschwenken des Anlageelementes (17) ein unteres Laufrad des am anderen Laufrad gehaltenen Fahrzeuges (14) nach oben hin anhebbar ist.

12. Fahrbetriebsmittel nach Anspruch 11, **dadurch gekennzeichnet, dass** das/die Anlageelement/e (17) manuell und/oder automatisch verschwenkbar sind.

13. Fahrbetriebsmittel nach einem der Ansprüche 1 bis 12,
**dadurch gekennzeichnet, dass** in wenigstens einem Teilbereich von wenigstens einem der Seitenbereiche (5) eine Seitenwand und/oder in wenigstens einem Teilbereich des Deckenbereiches (3) eine Decke angeordnet ist.

14. Fahrbetriebsmittel nach einem der Ansprüche 1 bis 13,
**dadurch gekennzeichnet, dass** seitlich vom Bodenbereich (4) weg ragend eine Trittfläche (14) angeordnet ist.

15. Seilbahnanlage mit Fahrbetriebsmitteln zum Transport von Personen und mit Fahrbetriebsmitteln (1) zum Transport von zweirädrigen Fahrzeugen (14), **dadurch gekennzeichnet, dass** wenigstens eines der Fahrbetriebsmittel (1) zum Transport von zweirädrigen Fahrzeugen (14) nach einem der Ansprüche 1 bis 14 ausgeführt ist und dass vorzugsweise die Rahmen der Fahrbetriebsmittel zum Transport von Personen und die Rahmen (2) der Fahrbetriebsmittel (1) zum Transport von zweirädrigen Fahrzeugen (14) im Wesentlichen die gleichen Außenmaße aufweisen.

## Claims

1. Movable operating unit (1) of a cable car system for transporting two-wheeled vehicles (14), wherein the movable operating unit (1) has a frame (2) whose ceiling region (3), floor region (4) and side regions (5) define a transport space (11), wherein a floor (9) is arranged in at least one subregion of the floor region (3), and wherein the movable operating unit (1) has a support arm (8) for connection to a hauling cable or a traction cable, **characterized in that** at least two holding devices (13) for holding in each case a running wheel of a vehicle (14) are arranged in the transport space (11) in the ceiling region (3), **in that** the movable operating unit (1) has at least one supporting element (12) which is arranged in the transport space (11) in the ceiling region (3) and extends vertically between the ceiling region (3) and the floor region (4) in a central region of the transport space (11), **in that** one or more holding devices (13), preferably all thereof, is/are arranged on the supporting element (12), **in that** the holding devices (13) are preferably arranged distributed uniformly around the supporting element (12), and **in that** the supporting element (12) can be rotated about a vertical axis.

2. Movable operating unit according to claim 1, **characterized in that** one or more than one holding device (13) is/are arranged on the frame (2), in particular on at least one of the side regions (5), and project/s inwards into the transport space (11) .

3. Movable operating unit according to claim 1 or 2, **characterized in that** the holding device/s (13) project/s radially outwards away from the supporting element (12).

4. Movable operating unit according to one of claims 1 to 3, **characterized in that** the supporting element (12) has a drive for rotating the supporting element (12) about the vertical axis.

5. Movable operating unit according to claim 4, **characterized in that** the supporting element (12) with the holding devices (13) arranged thereon can be rotated automatically and/or manually by means of a drive, for example an electric motor or a mechanism, arranged in the ceiling region (3) or in the floor region (4).

6. Movable operating unit according to one of claims 1 to 5, **characterized in that** at least a portion of the floor (9) is connected to the supporting element (12) and can be rotated together with the supporting element (12).

7. Movable operating unit according to one of claims 1 to 6, **characterized in that** the movable operating unit (1) has at least one unloading mechanism (21) which is arranged in the floor region (4) in such a way that a lower running wheel of the vehicle (14) held on the other running wheel can be raised upwards by pivoting the unloading mechanism (21).

8. Movable operating unit according to one of claims 1 to 7, **characterized in that** at least one contact element (16, 17), preferably one contact element (16, 17) per holding device (13), is arranged in the transport space (11), preferably in the floor region (4).

9. Movable operating unit according to claim 8, **characterized in that** the contact element/s (16, 17) is/are arranged on the supporting element (12).

10. Movable operating unit according to claim 8 or 9, **characterized in that** a pivotable, preferably separate, contact element (17) is assigned to each holding device (13).

11. Movable operating unit according to claim 10, **characterized in that** each contact element (17) is arranged in the floor region (4) in such a way that, by pivoting the contact element (17), a lower running wheel of the vehicle (14) held on the other running wheel can be raised upwards.

12. Movable operating unit according to claim 11, **characterized in that** the contact element/s (17) can be pivoted manually and/or automatically.

13. Movable operating unit according to one of claims 1 to 12, **characterized in that** a side wall is arranged in at least one subregion of at least one of the side regions (5) and/or a ceiling is arranged in at least one subregion of the ceiling region (3).

14. Movable operating unit according to one of claims 1 to 13, **characterized in that** a tread surface (14) is arranged projecting laterally away from the floor region (4).

15. Cable car system having movable operating units for transporting persons and having movable operating units (1) for transporting two-wheeled vehicles (14), **characterized in that** at least one of the movable operating unit (1) for transporting two-wheeled vehicles (14) is designed according to one of claims 1 to 14, and **in that** preferably the frames of the movable operating units for transporting persons and the frames (2) of the movable operating units (1) for transporting two-wheeled vehicles (14) have substantially the same external dimensions.

## Revendications

1. Moyen de transport (1) d'une installation de téléphérique pour le transport de véhicules à deux roues (14), lequel moyen de transport (1) présente un cadre (2) dont la partie supérieure (3), la partie inférieure (4) et les parties latérales (5) définissent un espace de transport (11), un fond (9) étant disposé au moins dans une partie de la partie inférieure (3), et lequel moyen de transport (1) présente un bras portant (8) pour la liaison avec un câble de transport ou un câble de traction, **caractérisé en ce qu'**au moins deux dispositifs de maintien (13) sont disposés dans l'espace de transport (11) dans la partie supérieure (3) pour retenir chacun une roue d'un véhicule (14), **en ce que** le moyen de transport (1) présente au moins un élément portant (12) disposé dans l'espace de transport (11) dans la partie supérieure (3) et placé verticalement dans une région centrale de l'espace de transport (11) entre la partie supérieure (3) et la partie inférieure (4), **en ce qu'**un ou plusieurs dispositifs de maintien (13), de préférence tous, sont disposés sur l'élément portant (12), **en ce que** les dispositifs de maintien (13) sont de préférence répartis à intervalles réguliers autour de l'élément portant (12) et **en ce que** l'élément portant (12) peut tourner autour d'un axe vertical.

2. Moyen de transport selon la revendication 1, **caractérisé en ce qu'**un ou plus d'un dispositif de maintien (13) est disposé sur le cadre (2), en particulier sur au moins une des parties latérales (5), et dépasse vers l'intérieur dans l'espace de transport (11).

3. Moyen de transport selon la revendication 1 ou 2, **caractérisé en ce que** le ou les dispositifs de maintien (13) dépassent de l'élément portant (12) vers l'extérieur dans le sens radial.

4. Moyen de transport selon l'une des revendications 1 à 3, **caractérisé en ce que** l'élément portant (12) présente un entraînement pour faire tourner l'élément portant (12) autour de l'axe vertical.

5. Moyen de transport selon la revendication 4, **caractérisé en ce que** l'élément portant (12) avec les dispositifs de maintien (13) disposés dessus peut être tourné automatiquement et/ou manuellement à l'aide d'un entraînement disposé dans la partie supérieure (3) ou dans la partie inférieure (4), par exemple d'un moteur électrique ou d'un mécanisme.

6. Moyen de transport selon l'une des revendications 1 à 5, **caractérisé en ce qu'**une partie au moins du fond (9) est reliée à l'élément portant (12) et peut être tournée en même temps que l'élément portant (12).

7. Moyen de transport selon l'une des revendications 1 à 6, **caractérisé en ce que** le moyen de transport (1) présente au moins un mécanisme de déchargement (21) qui est disposé dans la partie inférieure (4) de telle manière qu'un basculement du mécanisme de déchargement (21) permet de soulever vers le haut une roue inférieure du véhicule (14) retenu par l'autre roue.

8. Moyen de transport selon l'une des revendications 1 à 7, **caractérisé en ce qu'**au moins un élément d'appui (16, 17), de préférence un élément d'appui (16, 17) par dispositif de maintien (13), est disposé dans l'espace de transport (11), de préférence dans la partie inférieure (4).

9. Moyen de transport selon la revendication 8, **caractérisé en ce que** le ou les éléments d'appui (16, 17) sont disposés sur l'élément portant (12).

10. Moyen de transport selon la revendication 8 ou 9, **caractérisé en ce que** chaque dispositif de maintien (13) est associé à un élément d'appui (17) pivotant, de préférence séparé.

11. Moyen de transport selon la revendication 10, **caractérisé en ce que** chaque élément d'appui (17) est disposé dans la partie inférieure (4) de telle manière qu'un pivotement de l'élément d'appui (17) permet de soulever vers le haut une roue inférieure du véhicule (14) retenu par l'autre roue.

12. Moyen de transport selon la revendication 11, **caractérisé en ce que** le ou les éléments d'appui (17) peuvent être pivotés manuellement et/ou automatiquement.

13. Moyen de transport selon l'une des revendications 1 à 12, **caractérisé en ce qu'**une paroi latérale est disposée dans au moins une partie d'au moins une des parties latérales (5) et/ou un toit est disposé dans au moins une partie de la partie supérieure (3).

14. Moyen de transport selon l'une des revendications 1 à 13, **caractérisé en ce qu'**un marchepied (14) dépasse latéralement de la partie inférieure (4).

15. Installation de téléphérique avec des moyens de transport pour le transport de personnes et des moyens de transport (1) pour le transport de véhicules à deux roues (14), **caractérisé en ce qu'**au moins un des moyens de transport (1) pour le transport de véhicules à deux roues (14) est réalisé selon l'une des revendications 1 à 14 et **en ce que** les cadres des moyens de transport pour le transport de personnes et les cadres (2) des moyens de transport (1) pour le transport de véhicules à deux roues (14) ont sensiblement les mêmes dimensions extérieures.
